# EUROPÄISCHE PATENTSCHRIFT

(11) **EP 2 193 092 B1**
(45) Veröffentlichungstag und Bekanntmachung des Hinweises auf die Patenterteilung: **15.08.2012**
(21) Anmeldenummer: 08801313.1
(22) Anmeldetag: 09.09.2008
(51) Int. Cl.: B65G 69/18

(54) **ANDOCKEINRICHTUNG AUS ZWEI KUPPLUNGSVERSCHLÜSSEN ZUM UMWELTDICHTEN TRANSFER VON SCHÜTTGUT, ENTHALTEND MINDESTENS EINE VERRIEGELUNGSEINHEIT**
DOCKING DEVICE COMPRISING TWO COUPLING CLOSURES FOR THE ENVIRONMENTALLY SEALED TRANSFER OF BULK MATERIAL, HAVING AT LEAST ONE LOCKING UNIT
DISPOSITIF D'ADOSSEMENT COMPRENANT DEUX FERMETURES DE COUPLAGE POUR LE TRANSFERT, ISOLÉ DE L'ENVIRONNEMENT, DE MATIÈRE EN VRAC, RENFERMANT AU MOINS UNE UNITÉ DE VERROUILLAGE

(30) Priorität: 28.09.2007 DE 202007013676 U
(43) Veröffentlichungstag der Anmeldung: 09.06.2010
(73) Patentinhaber: GEA Pharma Systems AG, 4416 Bubendorf (CH)
(72) Erfinder: LAIS, Peter, 79379 Müllheim (DE); KOCH, Martin, 79395 Neuenburg-Grissheim (DE)
(74) Vertreter: Metten, Karl-Heinz
(86) Internationale Anmeldenummer: PCT/DE2008/001509
(87) Internationale Veröffentlichungsnummer: WO 2009/039823

(56) Entgegenhaltungen:
- EP-A- 0 554 096
- DE-U1- 20 014 871
- DE-U1- 20 117 669
- DE-U1- 29 915 973

## Beschreibung

Die vorliegende Erfindung betrifft eine Andockeinrichtung zum, insbesondere umweltisolierten, Umfüllen, Befüllen und/oder Entleeren von Behältnissen, umfassend über ihre jeweilige Verschlussseiten aneinander bündig anlegbare oder anliegende erste und zweite Kupplungsverschlüsse,

Für den kontaminationsfreien Transfer von Schüttgut, beispielsweise von Zwischen- oder Endprodukten, bedient man sich insbesondere in der pharmazeutischen oder der Lebensmittelindustrie verstärkt geeigneter Andockeinrichtungen, wie die beispielsweise in der EP 1 083 137 A1, EP 1 315 662 A1, EP 1 313 658 A1 und EP 554 096 A1 beschrieben werden DE 201 17 669 offenbart eine Anduckeinrichtung die dem Oberbegriff von Anspruch 1 entspricht. Die hierbei zum Einsatz kommenden Systeme basieren auf der Verwendung zweier Kupplungsverschlüsse, die mit so genannten (kreisförmigen) Halb- bzw. Schließklappen ausgestattet sind, welche bei gegenseitiger Anlage um eine gemeinsame Achse unter Freigabe bzw. Verschluss des Transferkanals gedreht werden können. Um ein besonders hohes Maß an Kontaminationsfreiheit zu erlangen, ist nicht nur wichtig, dass die in Rohrstutzen vorliegenden Schließklappen ein absolut dichtes Verschließen gewährleisten, sondern ebenfalls, dass die die Andockeinrichtung bildenden Kupplungsverschlüsse während des gesamten Transfervorgangs fest und insbesondere dicht miteinander verbunden sind. Insbesondere darf während des Schüttguttransfers der angedockte Zustand der beiden Kupplungsverschlüsse nicht aufgehoben werden, auch nicht durch äußere mechanische Einflüsse oder durch den Schüttguttransfer selber. Zu diesem Zweck werden regelmäßig Verriegelungseinheiten vorgesehen, welche die Rohrstutzen der die Andockeinrichtung bildenden Kupplungsverschlüsse bzw. deren Dichtungen fest gegeneinander pressen und in dieser Position während der gesamten Dauer des Schüttguttransfervorgangs halten. Beispielsweise kann man gemäß einer aus dem Stand der Technik bekannten Ausführungsvariante die angedockten Kupplungsverschlüsse miteinander verschrauben. Des weiteren können, beispielsweise hydraulisch bedienbare, Bajonettverschlüsse vorgesehen sein.

Die aus dem Stand der Technik bekannten Verriegelungssysteme für die genannten Andockeinrichtungen sind entweder umständlich und zeitintensiv zu bedienen oder apparativ sehr aufwendig. Als Nachteil hat sich ferner erwiesen, dass die aus dem Stand der Technik bekannten Verriegelungseinheiten für Andockeinrichtungen als externe Bauteile "aufgepfropft" werden und demgemäß vor Beschädigungen während der Handhabung der Kupplungsverschlüsse bzw. der Andockeinrichtung nicht geschützt sind.

Es wäre daher wünschenswert, auf Verriegelungseinheiten für Andockeinrichtungen zurückgreifen zu können, die nicht mit den Nachteilen des Stands der Technik behaftet sind und die darüber hinaus dauerhaft einen zuverlässigen und sicheren Schüttguttransfer gewährleisten.

Daher lag der vorliegenden Erfindung die Aufgabe zu Grunde, Andockeinrichtungen, enthaltend mindestens eine Verriegelungseinheit, verfügbar zu machen, die nicht mit den Nachteilen des Stands der Technik behaftet sind und die insbesondere im Dauerbetrieb bedienzuverlässig sind, keine Angriffsflächen für äußere Beschädigungen bieten und die die Andockeinrichtung bildenden Kupplungsverschlüsse auf apparativ einfache Weise, gleichwohl zuverlässig dicht miteinander reversibel verbinden.

Demgemäß wurde eine Andockeinrichtung zum, insbesondere umweltisolierten, Umfüllen, Befüllen und/oder Entleeren von Behältnissen gefunden, gemäß Anspruch 1, (auch erste Ausführungsform der Erfindung genannt), umfassend über ihre jeweiligen Verschlussseiten aneinander bündig anlegbare oder anliegende erste und zweite Kupplungsverschlüsse, wobei die Andockeinrichtung mit mindestens einer Verriegelungseinheit geeignet für die Verriegelung der Rohrstutzen von erstem und zweitem Kupplungsverschluss ausgestattet ist, umfassend mindestens ein in einem Durchgang mit einer Öffnung zur Außenseite des zweiten Kupplungsverschlusses vorliegendes bewegliches erstes Arretiermittel, insbesondere in Form einer Kugel, geeignet zur Wechselwirkung mit einem auf der Außenseite des Rohrstutzens des zweiten Kupplungsver-schlusses vorliegenden korrespondierenden zweiten Arretiermittel, sowie einen in einem Zylinder bewegbaren Bolzen mit einem ersten Abschnitt mit einem ersten Durchmesser, einem zweiten Abschnitt mit einem zweiten Durchmesser, der kleiner ist als der Durchmesser des ersten Abschnitts, und gegebenenfalls einem dritten Übergangsabschnitt zwischen dem ersten und dem zweiten Abschnitt mit sich verjüngendem Durchmesser, wobei der Durchgang seitlich in den Zylinder mündet und eine Länge besitzt, die kleiner ist als der Durchmesser des ersten Arretiermittels, so dass, wenn die Seitenfläche des ersten Abschnitts in Kontakt mit dem beweglichen ersten Arretiermittel ist, dieses Arretiermittel mit dem korrespondierenden zweiten Arretiermittel auf der Außenseite des Rohrstutzens des zweiten Kupplungsverschlusses unter Verriegelung von erstem und zweitem Kupplungsverschluss wechselwirkt, und dass, wenn das bewegliche erste Arretiermittel benachbart zu der Seitenfläche des zweiten oder gegebenenfalls dritten Abschnitts des Bolzens ist, die Rohrstutzen von erstem und zweitem Kupplungsverschluss nicht mehr gegeneinander verriegelbar bzw. verriegelt sind.

Die der Erfindung zugrunde liegende Aufgabe wird des weiteren gelöst durch eine Andockeinrichtung zum, insbesondere umweltisolierten, Umfällen, Befüllen und/oder Entleeren von Behältnissen (auch zweite Ausführungsform der Erfindung genannt), gemäß Anspruch 3, umfassend über ihre jeweiligen Verschlussseiten aneinander bündig anlegbare oder anliegende erste und zweite Kupplungsverschlüsse, wobei der erste und/oder der zweite Kupplungsverschluss, insbesondere an seiner Außenseite, über mindestens einen Zentrierstift verfügt, und wobei der zweite bzw. erste Kupplungsverschluss, insbesondere an seiner Außenseite, über mindestens eine zu dem Zentrierstift korrespondierende Zentrieröffnung, insbesondere ein Zentrierringelement, verfügt, die bei Ineinandergreifen den ersten und zweiten Kupplungsverschluss, insbesondere im gekoppelten Zustand, zentrieren, wobei die Andockeinrichtung mit mindestens einer Verriegelungseinheit geeignet für die Verriegelung der Rohrstutzen von erstem und zweitem Kupplungsverschluss ausgestattet ist, umfassend
in mindestens einem Zentrierstift von erstem und/oder zweitem Kupplungsverschluss
a) mindestens ein in einem Durchgang mit einer Öffnung zur Außenseite des Zentrierstiftes vorliegendes bewegliches erstes Arretiermittel, insbesondere in Form einer Kugel, geeignet zur, insbesondere formschlüssigen, verriegelnden Wechselwirkung mit einer Zentrieröffnung, insbesondere dem Rand der Zentrieröffnung, des korrespondierenden zweiten bzw. ersten Kupplungsverschlusses sowie
b) einen in einem zumindest abschnittsweise in dem Zentrierstift vorliegenden Zylinder bewegbaren Bolzen mit einem ersten Abschnitt mit einem ersten Durchmesser, einem zweiten Abschnitt mit einem zweiten Durchmesser, der kleiner ist als der Durchmesser des ersten Abschnitts, und gegebenenfalls einem dritten Übergangsabschnitt zwischen dem ersten und dem zweiten Abschnitt mit sich verjüngendem Durchmesser, wobei der Durchgang seitlich in den Zylinder mündet und eine Länge besitzt, die kleiner ist als der Durchmesser des ersten Arretiermittels, so dass, wenn die Seitenfläche des ersten Abschnitts in Kontakt mit dem beweglichen ersten Arretiermittel ist, dieses Arretiermittel mit der Zentrieröffnung, insbesondere dem Rand der Zentrieröffnung des zweiten bzw. ersten Kupplungsverschlusses unter Verriegelung von erstem und zweitem Kupplungsverschluss wechselwirkt, und dass, wenn das bewegliche erste Arretiermittel benachbart zu der Seitenfläche des zweiten oder gegebenenfalls dritten Abschnitts des Bolzens ist, die Rohrstutzen von erstem und zweitem Kupplungsverschluss nicht mehr gegeneinander verriegelbar bzw. verriegelt sind.

Gemäß einer Weiterentwicklung dieser zweiten Ausführungsform einer erfindungsgemäßen Andockeinrichtung kann vorgesehen sein, dass wenn die Seitenfläche des ersten Abschnitts des Bolzens in Kontakt mit dem beweglichen ersten Arretiermittel ist, dieses Arretiermittel mit der Zentrieröffnung des zweiten Kupplungsverschlusses in der Weise unter Verriegelung von erstem und zweitem Kupplungsverschluss wechselwirkt, dass das erste Arretiermittel mit einem in einer in und/oder auf einer Wandung, insbesondere der Innenseite, der Zentrieröffnung des zweiten Kupplungsverschlusses vorliegenden korrespondierenden zweiten Arretiermittel, insbesondere unter Formschluss, den ersten und den zweiten Kupplungsverschluß verriegelt.

Bei der ersten wie auch der zweiten Ausführungsform der Erfindung können die erste und zweite Kupplungsvorrichtung jeweils ausgestattet sein mit einer Verschlussseite und einer Behälterseite und jeweils umfassen einen Rohrstutzen und eine darin verschwenkbar um eine Achse gelagerte Schließklappe, enthaltend eine der Verschlussseite in der Schließstellung zugewandte Außenseite, wobei die Schließklappe an mindestens einer Seite, insbesondere auf beiden Seiten, längs der Achse mit einer Partialwelle oder einem Partialwellenstummel in jeweils zur Verschlussseite hin offenem Lager vorliegt, wobei die Partialwellen oder - wellenstummel des ersten Kupplungsverschlusses geeignet sind, um bei Anlage mit komplementären Partialwellen bzw. -wellenstummeln des zweiten Kupplungsverschlusses eine Welle oder einen Wellenstummel auszubilden, wobei die Außenseiten der Schließklappen von erstem und zweitem Kupplungsverschluss aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse reversibel in eine Öffnungsstellung schwenkbar sind.

Geeignete Andockeinrichtungen und Kupplungsverschlüsse stellen z.B. solche, wie in der EP 1 083 137 A1, EP 1 315 662 A1, EP 1 313 658 A1 und EP 554 096 A1 beschrieben, dar, solange und soweit diese eine für die erfindungsgemäße Andockeinrichtung vorgesehene Verriegelungseinheit umfassen. Die erfindungsgemäße Andockeinrichtung umfasst demgemäß auch sämtliche Andocksysteme, die auf dem Einsatz von so genannten Butterfly-Ventilen basieren.

Das erste Arretiermittel der Verriegelungseinheit stellt vorzugsweise eine Kugel dar. Dieses erste Arretiermittel kann selbstverständlich auch aus zwei oder mehreren beweglichen Einheiten, z.B. Kugeln, die miteinander verbunden sind oder miteinander wechselwirken, gebildet werden. Das zweite Arretiermittel auf der Außenseite des Rohrstutzens ist vorzugsweise derart ausgebildet, dass es mit dem beweglichen ersten Arretiermittel in der Weise in Wechselwirkung tritt, dass ein bewegungsinvarianter zweiter Kupplungsverschluss resultiert. Beispielsweise kann es sich bei dem zweiten Arretiermittel um einen, gegebenenfalls umlaufenden, Vorsprung auf der Außenseite des Rohrstutzens handeln. Zusätzlich oder alternativ kann in der Außenwandung des Rohrstutzens ein Einlass oder eine Einbuchtung vorgesehenen sein, in die das bewegliche erste Arretiermittel, insbesondere bündig, eingreift, um auf diese Weise den zweiten Kupplungsverschluss zu fixieren.

Gemäß einer Weiterentwicklung kann vorgesehen sein, dass die Andockeinrichtung über zwei oder mehr Verriegelungseinheiten verfügt. Dabei reichen regelmäßig für ein zuverlässiges Verriegeln zweiter Kupplungsverschlüsse einer Andockeinrichtung zwei Verriegelungseinheiten, die einander im wesentlichen gegenüberliegend angeordnet sind, aus. Die Verriegelungseinheiten sind relativ zu den zu verriegelnden Kupplungsverschlüssen vorzugsweise lagefixiert bzw. lagefixierbar, so dass z.B. ein Entriegeln durch einfaches Verschieben oder seitliches Versetzen der Verriegelungseinheiten oder der Kupplungsverschlüsse unterbunden wird. Erfindungsgemäße Andockeinrichtungen können ferner eine Andockplattform, auch Andockarbeitsplattform genannt, umfassen. Hierbei handelt es sich in der Regel um ein ringförmiges Gebilde bzw. Gehäuse mit einem Innendurchmesser, der geringfügig größer ist als der der Kupplungsverschlüsse und in das der erste Kupplungsverschluss der Andockeinrichtung eingesetzt bzw. eingehängt werden kann. Eine derartige Andockplattform verfügt demgemäß über Auflagen bzw. Kränze für den Kupplungsverschluss bzw. die Andockeinrichtung. Die hierbei zum Einsatz kommenden Andockplattformen umfassen demgemäß vorzugsweise mindestens eine, insbesondere mindestens zwei Verriegelungseinheiten, wie vorangehend beschrieben.

Dabei kann insbesondere vorgesehen sein, dass der Rohrstutzen des ersten Kupplungsverschlusses auf seiner Außenseite mit einem dritten Arretiermittel zur Auflage oder Arretierung auf bzw. mit einem vierten Arretiermittel der Verriegelungseinheit oder einer Andockplattform, z.B. in Form einer Auflage, ausgestattet ist. Der Abstand zwischen dem zweiten und dem dritten Arretiennittel von zweitem bzw. erstem Kupplungsverschluss wird bevorzugt derart eingestellt, dass bei Auflage oder Wechselwirkung des vierten Arretiermittels auf bzw. mit dem dritten Arretiermittel, das erste Arretiermittel mit dem zweiten Arretiermittel derart wechselwirkt, dass der erste und der zweite Kupplungsverschluss gegeneinander lagefixiert sind.

Gemäß einer Ausführungsform der erfindungsgemäßen Andockeinrichtung umfasst die Verriegelungseinheit eine Kugelsperrbolzenvorrichtung oder stellt eine solche dar.

Geeignete Andockeinrichtungen können beispielsweise auf der Verwendung zweier Kupplungsverschlüsse basieren, bei denen die eine z.B. in Form einer Auflage, eine so genannte Aktivklappe und die andere eine so genannte Passivklappe darstellen. Kupplungsverschlüsse bezeichnet man regelmäßig dann als Aktivklappen, wenn dieser Kupplungsverschluss mit einem Antrieb für die drehbar gelagerte Schließklappe verbunden oder verbindbar ist. Passivklappen umfassen folglich solche Kupplungsverschlüsse, die nicht mit einem derartigen Antrieb ausgestattet sind. Kupplungsverschlüsse in Form von Passivklappen bzw. deren Schließklappen werden im aneinander angelegten bzw. gekoppelten Zustand durch die anliegende Schließklappe der Aktivklappe um eine gemeinsame Achse mit bewegt.

Alternativ kann die Andockeinrichtung selbstverständlich auch aus zwei Kupplungsverschlüssen in Form von Aktivklappen gebildet sein, dass heißt beide Kupplungsverschlüsse sind separat jeweils mit einem Drehantrieb verbunden.

Gemäß einer weiteren Ausführungsform kann vorgesehen sein, dass die Partialwellen bzw. die -wellenstummel von erstem und zweitem Kupplungsverschluss mit mindestens einem Eingriffselement ausgestattet sind, in das ein komplementäres Eingriffselement, das in Wirkverbindung mit einem Antrieb bringbar ist oder steht, einführbar ist. Bei der vorangehend genannten Ausführungsform werden beide Kupplungsverschlüsse bzw. die Schließklappen beider Kupplungsverschlüsse einer Andockeinrichtung über einen gemeinsamen Antrieb um eine gemeinsame Achse gedreht. Hierbei werden beide Schließklappen vorzugsweise in gleicher Weise, mit einem Drehmoment beaufschlagt. Eine Unterscheidung in Aktiv- und Passivklappe ist bei dieser Ausführungsform nicht möglich. Demgemäß kann hierbei vorgesehen sein, dass die Partialwellen bzw. -wellenstummel von erstem und zweitem Kupplungsverschluss unter Ausbildung einer Welle oder eines Wellenstummels in den durch die Halblagerschalen von erstem und zweitem Kupplungsverschluss gebildeten Lagern um eine gemeinsame Achse schwenkbar sind. Eine solche Ausführungsform zeichnet sich vorteilhafter Weise auch dadurch aus, dass die Eingriffselemente der eine Welle oder einen Wellenstummel bildenden Partialwellen bzw. -wellenstummel ein einheitliches Eingriffselement für ein korrespondierendes Eingriffselement einer Antriebswelle, insbesondere in Form einer Nut oder eines Doms, bilden. Die vorangehend dargestellte Ausführungsform einer erfindungsgemäßen Andockeinrichtung verfügt vorzugsweise über durch mindestens eine Antriebswelle oder eine mit einem Antrieb in Wirkverbindung bringbare Welle, die mit mindestens einem Eingriffselement ausgestattet ist, das komplementär zu mindestens einem Eingriffselement von erstem oder zweiten Kupplungsverschluss, insbesondere zu dem einheitlichen Eingriffselement von erstem und zweitem Kupplungsverschluss, ist, so dass bei Eingriff dieser einander komplementären Eingriffselemente die aneinander anliegenden Schließklappen über den Antrieb schwenkbar sind.

Der vorliegenden Erfindung lag die überraschende Erkenntnis zu Grunde, dass sich die beiden, eine Andockeinrichtung bildenden Kupplungsverschlüsse auf besonders zuverlässige und technisch elegante und unaufwendige Art und Weise verriegeln lassen, wenn auf der Außenseite der Kupplungsverschlüsse bzw. der Außenseite der Rohrstutzen dieser Kupplungsverschlüsse mindestens eine, insbesondere mindestens zwei Verriegelungseinheiten, wie vorangehend definiert, eingesetzt werden. Diese Verriegelungseinheiten sind ohne weiteres in eine Andockplattform bzw. ein Gehäuse einer solchen Andockplattform integrierbar, so dass eine Beschädigung durch äußere Einflüsse, beispielsweise bei der Handhabung oder Einführung der Kupplungsverschlüsse in die Andockplattform nicht mehr gegeben ist. Zudem kommt die Verriegelungseinheit der erfindungsgemäßen Andockeinrichtung mit einer geringen Anzahl an Einzelbauteilen aus, die zudem, selbst im Dauerbetrieb, keiner sonderlichen Abnutzung ausgesetzt sind bzw. unterliegen, so dass ein wartungsarmer, gleichwohl zuverlässiger Betrieb gewährleistet werden kann.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1:: eine schematische Querschnittszeichnung durch einen Abschnitt der erfindungsgemäßen Andockeinrichtung, enthaltend eine erste Ausführungsform einer Verriegelungseinheit,
- Figur 2:: eine schematische Querschnittszeichnung durch einen Abschnitt der erfindungsgemäßen Andockeinrichtung, enthaltend eine alternative, zweite Ausführungsform einer Verriegelungseinheit.

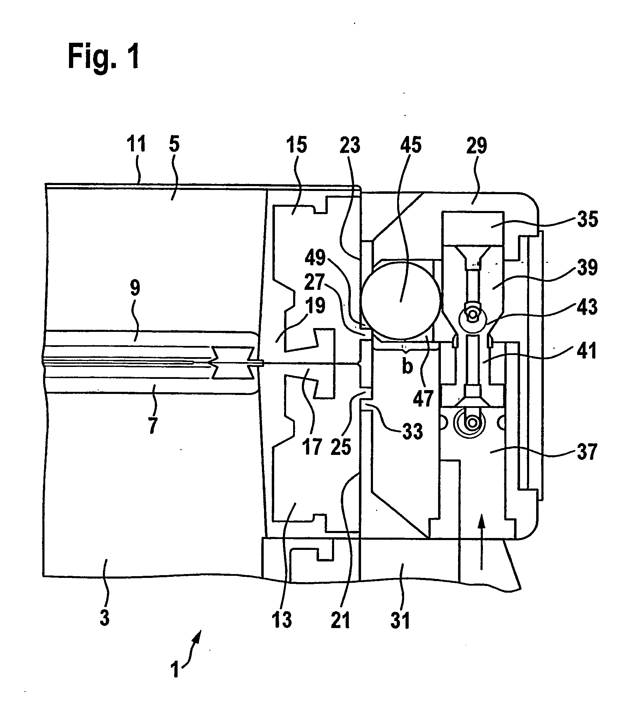

Figur 1 zeigt einen schematischen Ausschnitt einer erfindungsgemäßen Andockeinrichtung 1 enthaltend einen ersten Kupplungsverschluss 3 und einen zweiten Kupplungsverschluss 5. Die Halb- bzw. Schließklappen 7 und 9 von erstem und zweitem Kupplungsverschluss 3 bzw. 5 liegen unter Verschluß des Transferkanals 11, der durch die beiden Rohrstutzen 13 und 15 von erstem und zweitem Kupplungsverschluss gebildet wird, aneinander an. Die Dichtigkeit der Andockeinrichtung 1 im angedockten bzw. gekoppelten Zustand wird durch die aneinander anliegenden Rohrstutzendichtungen 17 und 19 von erstem und zweitem Kupplungsverschluss gewährleistet. Auf den Außenseiten 21 bzw. 23 der Rohrstutzen 13, 15 von erstem und zweiten Kupplungsverschluss 3 bzw. 5 sind dritte und zweite Halte- bzw. Arretierelemente 25 bzw. 27 vorgesehen. Die Verriegelungseinheit 29 ist in der dargestellten Ausführungsform Bestandteil einer Andockarbeitsplattform 31 für eine Andockeinrichtung 1. In die Andockarbeitsplattform 31 lassen sich der erste und der zweite Kupplungsverschluss, wie in Figur 1 dargestellt, einsetzen. Hierbei kommt das dritte Halteelement 25 auf der Außenseite 21 des Rohrstutzens 13 des ersten Kupplungsverschlusses 3 auf einem Vorsprung 33 (viertes Arretierelement) der Verriegelungseinheit 29 bzw. der Andockarbeitsplattform 31 zur Anlage. In einer Ausgestaltung kann das dritte Halteelement 25 den Außenumfang des Rohrstutzens 13 vollständig umlaufen. In gleicher Weise kann der Vorsprung 33 auf der Innenseite der Andockarbeitsplattform 31 umlaufend vorliegen. Selbstverständlich können auch nur zwei, vier oder mehr separate Halteelemente 25 (drittes Arretiermittel) bzw. dazu korrespondierende Vorsprünge 33 (viertes Arretiermittel) vorgesehen sein. Die Verriegelungseinheit 29 verfügt ferner über einen in einem Zylinder 35 beweglichen Kolben 37, der über zwei Abschnitte 39 und 41 mit unterschiedlichem Durchmesser verfügt, welche über einen Übergangsabschnitt 43 mit sich verjüngendem Durchmesser miteinander verbunden sind. Ferner verfügt die Verriegelungseinheit über eine Kugel 45 (erstes Arretiermittel), die in Wirkverbindung mit dem Kolben 37 steht. Diese Kugel 45 liegt in einem sich von dem Zylinder 35 seitlich erstreckenden Kanal 47 vor, welcher auf der der Außenseite 23 des Rohrstutzens 15 zugewandten Seite eine Öffnung 49 verfügt, die zwar einen partiellen, jedoch nicht den vollständigem Austritt der Kugel 45 gestattet. Der Kanal 47, in dem die Kugel 45 vorliegt, verfügt über eine Breite b, die geringer ist als der Durchmesser der Kugel, so dass, wenn der Kolbenabschnitt 39 mit dem größeren Durchmesser sich benachbart zur Kugel befindet, diese partiell aus der Öffnung 49 herausgeschoben und in dieser Position unverrückbar gehalten wird. In dieser Position wechselwirkt die Kugel 45 mit dem zweiten Arretierelement 27 auf der Außenseite 23 des zweiten Kupplungsverschlusses 5 mit der Folge, dass die Rohrstutzen 13 und 15 bzw. die Rohrstutzendichtungen 17 und 19 von erstem und zweitem Kupplungsverschluss 3 und 5 gegeneinander gepresst und arretiert gehalten werden. Erst indem man den Kolben 37 in dem Zylinder 35 wieder nach oben fährt (siehe Pfeil), wird die Kugel 45 freigegeben für eine Bewegung in dem Kanal bzw. Durchgang 47 in Richtung auf den Zylinder 35, so dass der zweite Kupplungsverschluss 5 von dem ersten Kupplungsverschluss 3 abgenommen werden kann. Der Kolben 37 kann beispielsweise pneumatisch betrieben werden.

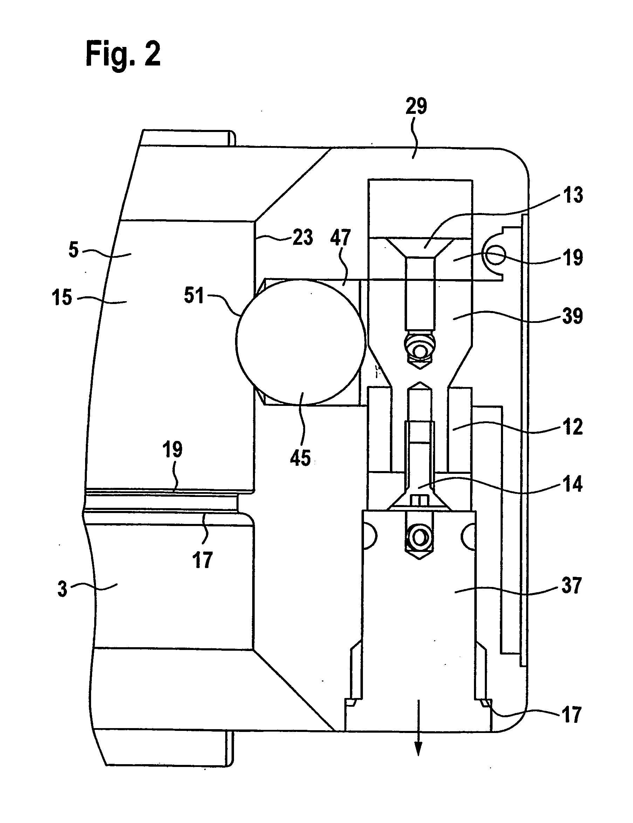

Figur 2 zeigt eine alternative Ausführungsform einer Verriegelungseinheit 29. Im Unterschied zu der in Figur 1 gezeigten Variante liegt kein Arretierelement in Form eines Vorsprungs 27 vor, vielmehr greift die Kugel 45 in eine in der Außenwand 21 des ersten Kupplungsverschlusses vorliegende Einbuchtung 51 ein, welche im wesentlichen die Form der Kugel aufnimmt und demgemäß über einen ähnlichen bzw. identischen Radius bzw. Kurvenverlauf verfügt. Indem bei Bewegung des Kolbens 37 nach unten (siehe Pfeil) die Kugel durch den Abschnitt 39 mit größerem Durchmesser aus dem Seitenkanal 47 hinausgedrängt wird, findet eine Wechselwirkung mit der Einbuchtung 51 auf der Außenseite 23 des Rohrstutzen 15 statt, welche die Rohrstutzen von erstem und zweiten Kupplungsverschluss 3 bzw. 5 bzw. deren Rohrstutzendichtungen 17 und 19 gegeneinander gepresst hält. Die untere Halte- bzw. Arretiereinheit ist in dem in Figur 2 gezeigten Ausschnitt der erfindungsgemäßen Andockeinrichtung 1 nicht wiedergegeben, kann indies beispielsweise genauso wie in Figur 1 ausgebildet sein.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Andockeinrichtung (1) zum, insbesondere umweltisolierten, Umfüllen, Befüllen und/oder Entleeren von Behältnissen, umfassend über ihre jeweiligen Verschlussseiten aneinander bündig anlegbare oder anliegende erste und zweite Kupplungsverschlüsse (3,5),
**dadurch gekennzeichnet, dass**
die Andockeinrichtung mit mindestens einer Verriegelungseinheit (29) geeignet für die Verriegelung der Rohrstutzen (13,15) von erstem und zweitem Kupplungsverschluss (3,5) ausgestattet ist, umfassend mindestens ein in einem Durchgang (47) mit einer Öffnung (49) zur Außenseite des zweiten Kupplungsverschlusses (3,5) vorliegendes bewegliches erstes Arretiermittel (45), insbesondere in Form einer Kugel (45), geeignet zur Wechselwirkung mit einem auf der Außenseite des Rohrstutzens (13,15) des zweiten Kupplungsverschlusses (3,5) vorliegenden korrespondierenden zweiten Arretiermittel(27), sowie einen in einem Zylinder (35) bewegbaren Bolzen mit einem ersten Abschnitt mit einem ersten Durchmesser, einem zweiten Abschnitt mit einem zweiten Durchmesser, der kleiner ist als der Durchmesser des ersten Abschnitts, und gegebenenfalls einem dritten Übergangsabschnitt (43) zwischen dem ersten und dem zweiten Abschnitt mit sich verjüngendem Durchmesser, wobei der Durchgang (47) seitlich in den Zylinder mündet und eine Länge besitzt, die kleiner ist als der Durchmesser des ersten Arretiermittels(45), so dass, wenn die Seitenfläche des ersten Abschnitts in Kontakt mit dem beweglichen ersten Arretiermittel (45) ist, dieses Arretiermittel mit dem korrespondierenden zweiten Arretiermittel (27) auf der Außenseite des Rohrstutzens (13,15) des zweiten Kupplungsverschlusses (3,5) unter Verriegelung von erstem und zweitem Kupplungsverschluss (3,5) wechselwirkt, und dass, wenn das bewegliche erste Arretiermittel benachbart zu der Seitenfläche des zweiten oder gegebenenfalls dritten Abschnitts des Bolzens ist, die Rohrstutzen von erstem und zweitem Kupplungsverschluss (3,5) nicht mehr gegeneinander verriegelbar bzw. verriegelt sind.

2. Andockvorrichtung nach Anspruch 1, **dadurch gekennzeichnet, dass** die erste und zweite Kupplungsvorrichtung jeweils ausgestattet sind mit einer Verschlussseite und einer Behälterseite und jeweils umfassen einen Rohrstutzen und eine darin verschwenkbar um eine Achse gelagerte Schließklappe (7,9), enthaltend eine der Verschlussseite in der Schließstellung zugewandte Außenseite, wobei die Schließklappe (7,9) an mindestens einer Seite, insbesondere auf beiden Seiten, längs der Achse mit einer Partialwelle oder einem Partialwellenstummel in jeweils zur Verschlussseite hin offenem Lager vorliegt,
wobei die Partialwellen oder -wellenstummel des ersten Kupplungsverschlusses geeignet sind, um bei Anlage mit komplementären Partialwellen bzw. -wellenstummeln des zweiten Kupplungsverschlusses eine Welle oder einen Wellenstummel auszubilden, wobei die Außenseiten der Schließklappen (7,9) von erstem und zweitem Kupplungsverschluss aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse reversibel in eine Öffnungsstellung schwenkbar sind.

3. Andockeinrichtung zum, insbesondere umweltisolierten, Umfüllen, Befüllen und/oder Entleeren von Behältnissen, insbesondere nach Anspruch 1 oder 2, umfassend über ihre jeweiligen Verschlussseiten aneinander bündig anlegbare oder anliegende erste und zweite Kupplungsverschlüsse,
wobei der erste und/oder der zweite Kupplungsverschluss, insbesondere an seiner Außenseite, über mindestens einen Zentrierstift verfügt, und wobei der zweite bzw. erste Kupplungsverschluss, insbesondere an seiner Außenseite, über mindestens eine zu dem Zentrierstift korrespondierende Zentrieröffnung, insbesondere ein Zentrierringelement, verfügt, die bei Ineinandergreifen den ersten und zweiten Kupplungsverschluss, insbesondere im gekoppelten Zustand, zentrieren, **dadurch gekennzeichnet, dass** die Andockeinrichtung mit mindestens einer Verriegelungseinheit geeignet für die Verriegelung der Rohrstutzen von erstem und zweitem Kupplungsverschluss ausgestattet ist, umfassend
in mindestens einem Zentrierstift von erstem und/oder zweitem Kupplungsverschluss
a) mindestens ein in einem Durchgang mit einer Öffnung zur Außenseite des Zentrierstiftes vorliegendes bewegliches erstes Arretiermittel, insbesondere in Form einer Kugel, geeignet zur, insbesondere formschlüssigen, verriegelnden Wechselwirkung mit einer Zentrieröffnung, insbesondere dem Rand der Zentrieröffnung, des korrespondierenden zweiten bzw. ersten Kupplungsverschlusses sowie
b) einen in einem zumindest abschnittsweise in dem Zentrierstift vorliegenden Zylinder bewegbaren Bolzen mit einem ersten Abschnitt mit einem ersten Durchmesser, einem zweiten Abschnitt mit einem zweiten Durchmesser, der kleiner ist als der Durchmesser des ersten Abschnitts, und gegebenenfalls einem dritten Übergangsabschnitt zwischen dem ersten und dem zweiten Abschnitt mit sich verjüngendem Durchmesser, wobei der Durchgang seitlich in den Zylinder mündet und eine Länge besitzt, die kleiner ist als der Durchmesser des ersten Arretiermittels, so dass, wenn die Seitenfläche des ersten Abschnitts in Kontakt mit dem beweglichen ersten Arretiermittel ist, dieses Arretiermittel mit der Zentrieröffnung, insbesondere dem Rand der Zentrieröffnung des zweiten bzw. ersten Kupplungsverschlusses unter Verriegelung von erstem und zweitem Kupplungsverschluss wechselwirkt, und dass, wenn das bewegliche erste Arretiermittel benachbart zu der Seitenfläche des zweiten oder gegebenenfalls dritten Abschnitts des Bolzens ist, die Rohrstutzen von erstem und zweitem Kupplungsverschluss nicht mehr gegeneinander verriegelbar bzw. verriegelt sind.

4. Andockvorrichtung nach Anspruch 3, **dadurch gekennzeichnet, dass** die erste und zweite Kupplungsvorrichtung jeweils ausgestattet sind mit einer Verschlussseite und einer Behälterseite und jeweils umfassen einen Rohrstutzen und eine darin verschwenkbar um eine Achse gelagerte Schließklappe, enthaltend eine der Verschlussseite in der Schließstellung zugewandte Außenseite, wobei die Schließklappe an mindestens einer Seite, insbesondere auf beiden Seiten, längs der Achse mit einer Partialwelle oder einem Partialwellenstummel in jeweils zur Verschlussseite hin offenem Lager vorliegt,
wobei die Partialwellen oder -wellenstummel des ersten Kupplungsverschlusses geeignet sind, um bei Anlage mit komplementären Partialwellen bzw. -wellenstummeln des zweiten Kupplungsverschlusses eine Welle oder einen Wellenstummel auszubilden, wobei die Außenseiten der Schließklappen von erstem und zweitem Kupplungsverschluss aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse reversibel in eine Öffnungsstellung schwenkbar sind.

5. Andockeinrichtung nach Anspruch 3 oder 4, **dadurch gekennzeichnet, dass**,
wenn die Seitenfläche des ersten Abschnitts des Bolzens in Kontakt mit dem beweglichen ersten Arretiermittel ist, dieses Arretiermittel mit der Zentrieröffnung des zweiten Kupplungsverschlusses in der Weise unter Verriegelung von erstem und zweitem Kupplungsverschluss wechselwirkt, dass das erste Arretiermittel mit einem in einer in und/oder auf einer Wandung, insbesondere der Innenseite, der Zentrieröffnung des zweiten Kupplungsverschlusses vorliegenden korrespondierenden zweiten Arretiermittel, insbesondere unter Formschluss, den ersten und den zweiten Kupplungsverschluß verriegelt.

6. Andockeinrichtung nach einem der vorangehenden Ansprüche, **dadurch gekennzeichnet, dass** diese über zwei oder mehr Verriegelungseinheiten verfügt.

7. Andockeinrichtung nach Anspruch 6, **dadurch gekennzeichnet, dass** zwei Verrieglungseinheiten im wesentlichen einander gegenüberliegend angeordnet sind.

8. Andockeinrichtung nach einem der vorangehenden Ansprüche, **dadurch gekennzeichnet, dass** die Verrieglungseinheit eine Kugelsperrbolzenvorrichtung umfasst.

9. Andockeinrichtung nach einem der vorangehenden Ansprüche, **dadurch gekennzeichnet, dass** der erste Kupplungsverschluss eine Aktivklappe und der zweite Kupplungsverschluss eine Passivklappe darstellen.

10. Andockeinrichtung nach einem der Ansprüche 1 bis 8, **dadurch gekennzeichnet, dass** die Partialwellen bzw. die -wellenstummel von erstem und zweitem Kupplungsverschluss mit mindestens einem Eingriffselement ausgestattet sind, in das ein komplementäres Eingriffselement, das in Wirkverbindung mit einem Antrieb bringbar ist oder steht, einführbar ist.

11. Andockeinrichtung nach Anspruch 10, **dadurch gekennzeichnet, dass** die Partialwellen bzw. -wellenstummel von erstem und zweitem Kupplungsverschluss unter Ausbildung einer Welle oder eines Wellenstummels in den durch die Halblagerschalen von erstem und zweitem Kupplungsverschluss gebildeten Lagern um eine gemeinsame Achse schwenkbar sind.

12. Andockeinrichtung nach Anspruch 10 oder 11, **dadurch gekennzeichnet, dass** die Eingriffselemente der eine Welle oder einen Wellenstummel bildenden Partialwellen bzw. - wellenstummel ein einheitliches Eingriffselement für ein korrespondierendes Eingriffselement einer Antriebswelle, insbesondere in Form einer Nut oder eines Doms, bilden.

13. Andockeinrichtung nach einem der Ansprüche 10 bis 12, **gekennzeichnet durch** mindestens eine Antriebswelle oder eine mit einem Antrieb in Wirkverbindung bringbare Welle, die mit mindestens einem Eingriffselement ausgestattet ist, das komplementär zu mindestens einem Eingriffselement von erstem oder zweiten Kupplungsverschluss, insbesondere zu dem einheitlichen Eingriffselement von erstem und zweitem Kupplungsverschluss, ist, so dass bei Eingriff dieser einander komplementären Eingriffselemente die aneinander anliegenden Schließklappen über den Antrieb schwenkbar sind.

14. Andockeinrichtung nach einem der vorangehenden Ansprüche, **dadurch gekennzeichnet, dass** die Öffnung (49) derart dimensioniert ist, dass das erste Arretiermittel (45) aus dieser nur partiell herausführbar ist.

15. Andockeinrichtung nach einem der vorangehenden Ansprüche, ferner umfassend eine Andockplattform zumindest geeignet zur Aufnahme des ersten Kupplungsverschlusses.

16. Andockeinrichtung nach einem der vorangehenden Ansprüche, **dadurch gekennzeichnet, dass** der Rohrstutzen des ersten Kupplungsverschlusses (3,5) auf seiner Außenseite mit einem dritten Arretiermittel (25) zur Auflage oder Arretierung auf bzw. mit einer ersten Auflage oder Arretiereinheit der Verriegelungseinheit oder einer Andockplattform ausgestattet ist.

17. Andockeinrichtung nach einem der Ansprüche 15 oder 16, **dadurch gekennzeichnet, dass** die Andockplattform die mindestens eine Verriegelungseinheit zumindest teilweise umfasst.

## Claims

1. A docking device (1) for decanting, filling and/or emptying containers, particularly in an environmentally isolated manner, comprising first and second coupling closures (3, 5) which can be or are placed flush against each other by means of the respective closure sides thereof,
**characterized in that**
the docking device has at least one locking unit (29) suitable for locking the nozzle stubs (13, 15) of the first and second coupling closure (3, 5), comprising at least one movable first arresting means (45), in particular in the form of a ball (45), located in a passageway (47) with an opening (49) towards the external side of the second coupling closure (3, 5), said first arresting means being suitable for interaction with a corresponding second arresting means (27) located on the external side of the nozzle stub (13, 15) of the second coupling closure (3, 5), and a bolt movable in a cylinder (35), said bolt having a first section with a first diameter, a second section with a second diameter which is smaller than the diameter of the first section, and optionally a third transition section (43) between the first and the second section, said third transition section having a tapering diameter, wherein the passageway (47) leads laterally into the cylinder and has a length that is smaller than the diameter of the first arresting means (45), so that, if the side surface of the first section contacts the movable first arresting means (45), said arresting means interacts with the corresponding second arresting means (27) on the external side of the nozzle stub (13, 15) of the second coupling closure (3,5) while locking the first and second coupling closure (3, 5), and so that, if the movable first arresting means is adjacent to the side surface of the second or optionally the third section of the bolt, the nozzle stubs of the first and second coupling closure (3, 5) are no longer lockable or locked against each other.

2. The docking device of claim 1, **characterized in that** the first and second coupling device each have a closure side and a container side and each comprise a nozzle stub and a closing flap (7, 9) which is mounted in said nozzle stub so as to be pivotable about an axis, said closing flap having an external side that faces the closure side in the closed position, wherein the closing flap (7, 9) is located on at least one side, particularly on both sides, along the axis as a partial shaft or partial shaft stub in a bearing open towards the respective closure side,
wherein the partial shafts or partial shaft stubs of the first coupling closure are suited to form a shaft or shaft stub if they are placed against the complementary partial shafts or partial shaft stubs of the second coupling closure, wherein the external sides of the closing flaps (7, 9) of the first and the second coupling closure are or can be placed against each other and which, if they are placed against each other, can be reversibly pivoted about a common axis from a closed position, in which they close the transfer channel formed by the nozzle stub of the first coupling closure and the nozzle stub of the second coupling closure, into an opened position.

3. A docking device for decanting, filling and/or emptying containers, particularly in an environmentally isolated manner, particularly according to claim 1 or 2, comprising first and second coupling closures which can be or are placed flush against each other by means of the respective closure sides thereof,
wherein the first and/or second coupling closure has at least one centring pin, particularly on its external side, and wherein the second or first coupling closure, respectively, has at least one centring opening corresponding to the centring pin, particularly on its external side, said centring opening particularly being a centring ring element, said centring pin and centring opening centring the first and second coupling closure, particularly in their coupled state, when they grip each other, **characterized in that**
the docking device has at least one locking unit suitable for locking the nozzle stubs of the first and second coupling closure, said locking unit comprising
in at least one centring pin of the first and/or second coupling closure
a) at least one movable first arresting means, in particular in the form of a ball, located in a passageway with an opening towards the external side of the centring pin, said first arresting means being suitable for locking interaction, particularly by form closure, with a centring opening, particularly with the edge of said centring opening, of the corresponding second or first coupling closure, and
b) a bolt movable in a cylinder, said cylinder being present at least in sections in the centring pin, said bolt having a first section with a first diameter, a second section with a second diameter which is smaller than the diameter of the first section, and optionally a third transition section between the first and the second section, said third transition section having a tapering diameter, wherein the passageway leads laterally into the cylinder and has a length that is smaller than the diameter of the first arresting means, so that, if the side surface of the first section contacts the movable first arresting means, said arresting means interacts with the centring opening, particularly with the edge of the centring opening, of the second or first coupling closure, respectively, while locking the first and second coupling closure, and so that, if the movable first arresting means is adjacent to the side surface of the second or optionally the third section of the bolt, the nozzle stubs of the first and second coupling closure are no longer lockable or locked against each other.

4. The docking device of claim 3, **characterized in that** the first and second coupling device each have a closure side and a container side and each comprise a nozzle stub and a closing flap which is mounted in said nozzle stub so as to be pivotable about an axis, said closing flap having an external side that faces the closure side in the closed position, wherein the closing flap is located on at least one side, particularly on both sides, along the axis as a partial shaft or partial shaft stub in a bearing open towards the respective closure side, wherein the partial shafts or partial shaft stubs of the first coupling closure are suited to form a shaft or shaft stub if they are placed against the complementary partial shafts or partial shaft stubs of the second coupling closure, wherein the external sides of the closing flaps of the first and the second coupling closure are or can be placed against each other and which, if they are placed against each other, can be reversibly pivoted about a common axis from a closed position, in which they close the transfer channel formed by the nozzle stub of the first coupling closure and the nozzle stub of the second coupling closure, into an opened position.

5. The docking device of claim 3 or 4, **characterized in that**
if the side surface of the first section of the bolt contacts the movable first arresting means, said first arresting means interacts with the centring opening of the second coupling closure while locking the first and second coupling closure in such a way that the first arresting means interacts with a corresponding second arresting means located in and/or on a wall, particularly of the internal side, of the centring opening of the second coupling closure, thereby locking, particularly by form closure, the first and the second coupling closure.

6. The docking device according to any one of the preceding claims, **characterized in that** said docking device has two or more locking units.

7. The docking device of claim 6, **characterized in that** two locking units are arranged substantially opposite each other.

8. The docking device according to any one of the preceding claims, **characterized in that** the locking unit comprises a ball lock bolt device.

9. The docking device according to any one of the preceding claims, **characterized in that** the first coupling closure represents an active valve and the second coupling closure represents a passive valve.

10. The docking device of any one of claims 1 to 8, **characterized in that** the partial shafts or partial shaft stubs, respectively, of the first and the second coupling closure have at least one engagement element into which a complementary engagement element, which can be brought into or is in operative connection with a drive, can be inserted.

11. The docking device of claim 10, **characterized in that** the partial shafts or partial shaft stubs, respectively, of the first and the second coupling closure can be pivoted about a common axis in the bearings formed by the semi-bearing cups of the first and the second coupling closure, forming a shaft or shaft stub.

12. The docking device of claim 10 or 11, **characterized in that** the engagement elements of the partial shafts or partial shaft stubs forming a shaft or shaft stub form a uniform engagement element for a corresponding engagement element of a drive shaft, particularly in the form of a groove or a pin.

13. The docking device of any one of claims 10 to 12, **characterized by** at least one drive shaft or a shaft than can be brought into operative connection with a drive, said shaft having at least one engagement element that is complementary to at least one engagement element of the first or the second coupling closure, particularly to the uniform engagement element of the first and the second coupling closure, so that the adjacent closing flaps can be pivoted by the drive if said complementary engagement elements are engaged.

14. The docking device according to any one of the preceding claims, **characterized in that** the opening (49) is dimensioned such that the first arresting means (45) can only be partially moved out of said opening.

15. The docking device according to any one of the preceding claims, further comprising a docking platform that is suitable at least as a receptacle for the first coupling closure.

16. The docking device according to any one of the preceding claims, **characterized in that** the nozzle stub of the first coupling closure (3, 5) is equipped on its external side with a third arresting means (25) suitable for resting on or arresting with a first rest or arresting unit of the locking unit or of a docking platform.

17. The docking device of claim 15 or 16, **characterized in that** the docking platform comprises, at least partially, the at least one locking unit.

## Revendications

1. Dispositif d'adossement (1) en vue du transvasement, du remplissage et/ou du vidage, en particulier isolé de l'environnement, de réservoirs, comprenant par leurs côtés de fermeture respectifs une première et une deuxième fermetures de couplage (3, 5) pouvant être mis en contact à ras l'une contre l'autre ou étant en contact à ras l'une contre l'autre, **caractérisé en ce que**
le dispositif d'adossement est muni d'au moins une unité de verrouillage (29) convenant pour le verrouillage de deux embouts tubulaires (13, 15) de la première et de la deuxième fermetures de couplage (3, 5), comprenant au moins un premier moyen d'arrêt (45) mobile disposé dans un passage (47) avec une ouverture (49) vers le côté extérieur de la deuxième fermeture de couplage (3, 5), en particulier en forme de bille (45), convenant pour l'interaction avec un deuxième moyen d'arrêt (27) correspondant disposé sur le côté extérieur de l'embout tubulaire (13, 15) de la deuxième fermeture de couplage (3, 5), ainsi qu'un goujon déplaçable dans un cylindre (35) avec une première section avec un premier diamètre, une deuxième section avec un deuxième diamètre, lequel est inférieur au diamètre de la première section et, le cas échéant, une troisième section de jonction (43) entre la première et la deuxième sections avec diamètre se rétrécissant, le passage (47) débouchant latéralement dans le cylindre et possédant une longueur qui est inférieure au diamètre du premier moyen d'arrêt (45), de telle sorte que, lorsque la surface latérale de la première section est en contact avec le premier moyen d'arrêt (45) mobile, ce moyen d'arrêt interagit avec le deuxième moyen d'arrêt (27) correspondant sur le côté extérieur de l'embout tubulaire (13, 15) de la deuxième fermeture de couplage (3, 5) avec verrouillage des première et deuxième fermetures de couplage (3, 5), et que, lorsque le premier moyen d'arrêt mobile se trouve au voisinage de la surface latérale de la deuxième ou, le cas échéant, troisième section du goujon, les embouts tubulaires des première et deuxième fermetures de couplage (3, 5) ne sont plus verrouillables ou verrouillées l'un contre l'autre.

2. Dispositif d'adossement selon la revendication 1, **caractérisé en ce que** les premier et deuxième dispositifs de couplage sont respectivement munis d'un côté de fermeture et d'un côté récipient et comprennent respectivement un embout tubulaire et un volet de fermeture (7, 9) monté sur un axe de façon à pouvoir basculer dans celui-ci, contenant un côté extérieur tourné en position fermée vers le côté de fermeture, le volet de fermeture (7, 9) étant disposé sur au moins un côté, en particulier sur les deux côtés, le long de l'axe avec un arbre partiel ou un bout d'arbre partiel dans un palier ouvert respectivement vers le côté de fermeture,
les arbres partiels ou les bouts d'arbre partiel de la première fermeture de couplage convenant pour la formation d'un arbre ou d'un bout d'arbre lors du contact avec des arbres partiels complémentaires ou avec des bouts d'arbres partiels complémentaires de la deuxième fermeture de couplage, les côtés extérieurs des volets de fermeture (7, 9) de la première et de la deuxième fermetures de couplage étant en contact l'un contre l'autre ou pouvant être mis en contact l'un contre l'autre et, en état de contact l'un contre l'autre, pouvant être basculés de façon réversible sur un axe commun dans une position d'ouverture, à partir d'une position de fermeture dans laquelle ils ferment le canal de transfert formé par l'embout tubulaire de la première fermeture de couplage et par l'embout tubulaire de la deuxième fermeture de couplage.

3. Dispositif d'adossement en vue du transvasement, du remplissage et/ou du vidage, en particulier isolé de l'environnement, de réservoirs, en particulier selon la revendication 1 ou 2, comprenant par leurs côtés de fermeture respectifs une première et une deuxième fermetures de couplage pouvant être mises en contact à ras l'une contre l'autre ou étant en contact à ras l'une contre l'autre,
la première et/ou la deuxième fermeture de couplage, disposant d'au moins une broche de centrage en particulier sur son côté extérieur, et la deuxième ou la première fermeture de couplage disposant d'au moins une ouverture de centrage, en particulier un élément annulaire de centrage, correspondant à la broche de centrage, en particulier sur son côté extérieur, lesquelles, lors de l'encastrement, centrent les première et deuxième fermetures de couplage, en particulier en état de couplage, **caractérisé en ce que**
le dispositif d'adossement est muni d'au moins une unité de verrouillage convenant au verrouillage des embouts tubulaires des première et deuxième fermetures de couplage, comprenant
dans au moins une broche de centrage de la première et/ou de la deuxième fermetures de couplage
a) au moins un premier moyen d'arrêt mobile disposé dans un passage avec une ouverture vers le côté extérieur de la broche de centrage, en particulier en forme de bille, convenant à l'interaction verrouillante, en particulier par liaison de forme, avec une ouverture de centrage, en particulier au bord de l'ouverture de centrage, de la deuxième ou première fermetures de couplage correspondante, ainsi que
b) un goujon déplaçable dans un cylindre disposé au moins partiellement dans la broche de centrage avec une première section avec un premier diamètre, une deuxième section avec un deuxième diamètre, lequel est inférieur au diamètre de la première section, et le cas échéant une troisième section de jonction entre la première et la deuxième sections avec diamètre se rétrécissant, le passage débouchant latéralement dans le cylindre et possédant une longueur inférieure au diamètre du premier moyen d'arrêt, de telle sorte que lorsque la surface latérale de la première section est en contact avec le premier moyen d'arrêt mobile, ce moyen d'arrêt interagit avec l'ouverture de centrage, en particulier avec le bord de l'ouverture de centrage de la deuxième ou de la première fermetures de couplage avec verrouillage de la première ou de la deuxième fermetures de couplage, et de telle sorte que, lorsque le premier moyen d'arrêt mobile se trouve au voisinage de la surface latérale de la deuxième ou le cas échéant de la troisième section du goujon, les embouts tubulaires de la première et de la deuxième fermetures de couplage ne sont plus verrouillables ou verrouillés l'un contre l'autre.

4. Dispositif d'adossement selon la revendication 3, **caractérisé en ce que** les premier et deuxième dispositifs de couplage sont respectivement munis d'un côté de verrouillage et d'un côté récipient et comprennent respectivement un embout tubulaire et un volet de fermeture monté sur un axe de façon à pouvoir basculer dans celui-ci, comprenant un côté extérieur tourné vers le côté de verrouillage dans la position de fermeture, le volet de fermeture étant disposé sur au moins un côté, en particulier sur les deux côtés le long de l'axe avec un arbre partiel ou un bout d'arbre partiel dans un palier ouvert respectivement vers le côté de verrouillage,
les arbres partiels ou les bouts d'arbre partiel de la première fermeture de couplage convenant pour la formation d'un arbre ou d'un bout d'arbre lors du contact avec des arbres partiels complémentaires ou avec des bouts d'arbres partiels complémentaires de la deuxième fermeture de couplage, les côtés extérieurs des volets de fermeture de la première et de la deuxième fermetures de couplage étant en contact l'un contre l'autre ou pouvant être mis en contact l'un contre l'autre et, en état de contact l'un contre l'autre, pouvant être basculés de façon réversible sur un axe commun dans une position d'ouverture, à partir d'une position de fermeture dans laquelle ils ferment le canal de transfert formé par l'embout tubulaire de la première fermeture de couplage et par l'embout tubulaire de la deuxième fermeture de couplage.

5. Dispositif d'adossement selon la revendication 3 ou 4, **caractérisé en ce que**, lorsque la surface latérale de la premier section du goujon est en contact avec le premier moyen d'arrêt mobile, ce moyen d'arrêt interagit avec l'ouverture de centrage de la deuxième fermeture de couplage avec verrouillage des première et deuxième fermetures de couplage, de telle sorte que le premier moyen d'arrêt verrouille, en particulier par liaison de forme, la première et la deuxième fermetures de couplage avec un deuxième moyen d'arrêt correspondant disposé dans et/ou sur une paroi, en particulier du côté intérieur, de l'ouverture de centrage de la deuxième fermeture de couplage.

6. Dispositif d'adossement selon l'une des revendications précédentes, **caractérisé en ce que** celui-ci dispose de deux ou plusieurs unités de verrouillage.

7. Dispositif d'adossement selon la revendication 6, **caractérisé en ce que** deux unités de verrouillage sont disposées essentiellement l'une en face de l'autre.

8. Dispositif d'adossement selon l'une des revendications précédentes, **caractérisé en ce que** l'unité de verrouillage comprend un dispositif avec goujon à bille de verrouillage.

9. Dispositif d'adossement selon l'une des revendications précédentes, **caractérisé en ce que** la première fermeture de couplage représente un volet actif et la deuxième fermeture de couplage représente un volet passif.

10. Dispositif d'adossement selon l'une des revendications 1 à 8, **caractérisé en ce que** les arbres partiels ou les bouts d'arbre partiel des première et deuxième fermetures de couplage sont munis d'au moins un élément d'engagement, dans lequel un élément d'engagement complémentaire, lequel peut être mis ou se trouve en liaison solidaire avec un entraînement, est insérable.

11. Dispositif d'adossement selon la revendication 10, **caractérisé en ce que** les arbres partiels ou les bouts d'arbre partiel des première et deuxième fermetures de couplage sont basculables sur un axe commun en formant un arbre ou un bout d'arbre dans les paliers formés par les coques de palier des première et deuxième fermetures de couplage.

12. Dispositif d'adossement selon la revendication 10 ou 11, **caractérisé en ce que** les éléments d'engagement des arbres partiels ou bouts d'arbre partiel formant un arbre ou un bout d'arbre forment un élément d'engagement uniforme pour un élément d'engagement correspondant d'un arbre d'entraînement, en particulier sous forme d'une rainure ou d'une broche.

13. Dispositif d'adossement selon l'une des revendications 10 à 12, **caractérisé par** au moins un arbre d'entraînement ou un arbre pouvant être mis en liaison solidaire avec un entraînement, lequel arbre est muni d'au moins un élément d'engagement, lequel est complémentaire d'au moins un élément d'engagement des première ou deuxième fermetures de couplage, en particulier de l'élément d'engagement uniforme des première et deuxième fermetures de couplage, de telle sorte que, lors de l'engagement de ces éléments d'engagement complémentaires entre eux, les volets de fermeture en contact l'un contre l'autre sont basculables par l'entraînement.

14. Dispositif d'adossement selon l'une des revendications précédentes, **caractérisé en ce que** l'ouverture (49) est dimensionnée de telle sorte que le premier moyen d'arrêt (45) n'est retirable que partiellement hors de celle-ci.

15. Dispositif d'adossement selon l'une des revendications précédentes, comprenant en outre une plate-forme d'adossement convenant au moins pour l'accueil de la première fermeture de couplage:

16. Dispositif d'adossement selon l'une des revendications précédentes, **caractérisé en ce que** l'embout tubulaire de la première fermeture de couplage (3, 5) est muni sur son côté extérieur d'un troisième moyen d'arrêt (25) pour l'appui ou l'arrêt sur ou avec un premier appui ou unité d'arrêt de l'unité de verrouillage ou d'une plate-forme d'adossement.

17. Dispositif d'adossement selon l'une des revendications 15 ou 16, **caractérisé en ce que** la plate-forme d'adossement comprend au moins partiellement l'au moins une unité de verrouillage.
